# EUROPEAN PATENT SPECIFICATION

(11) **EP 4 444 459 B1**
(45) Date of publication and mention of the grant of the patent: **22.10.2025**
(21) Application number: 22830823.5
(22) Date of filing: 07.12.2022
(51) Int. Cl.: B01J 4/00, B01J 19/00, B01J 19/24, B01J 19/26

(54) **INTERNAL LOOP REACTOR**
INTERNER SCHLEIFENREAKTOR
RÉACTEUR À BOUCLE INTERNE

(30) Priority: 08.12.2021 EP 21213096
(43) Date of publication of application: 16.10.2024
(73) Proprietor: BASF SE, 67056 Ludwigshafen am Rhein (DE)
(72) Inventor: LOEFFLER, Ralf Dirk, 67056 Ludwigshafen (DE); WOELFERT, Andreas, 67056 Ludwigshafen (DE); VON HARBOU, Erik Johannes, 67434 Neustadt (DE); BRUNNER, Bernhard, 67056 Ludwigshafen (DE)
(74) Representative: BASF IP Association
(86) International application number: PCT/EP2022/084749
(87) International publication number: WO 2023/104863

(56) References cited:
- EP-A2- 0 034 739
- WO-A1-2020/049111
- GB-A- 1 013 888
- US-A1- 2004 065 590
- US-B1- 10 654 009
- WARMELING HELGE ET AL: "Jet loop reactors as a versatile reactor set up - Intensifying catalytic reactions: A review", CHEMICAL ENGINEERING SCIENCE, OXFORD, GB, vol. 149, 21 April 2016 (2016-04-21), pages 229 - 248, XP029550697, ISSN: 0009-2509, DOI: 10.1016/J.CES.2016.04.032

## Description

The present invention relates to an internal loop reactor and a process for performing a continuous high-pressure reaction in the internal loop reactor.

Internal loop reactors for continuous high-pressure reactions are suitably designed to allow for a high degree of mixing so as to achieve sufficient conversion of reactants at high selectivity. One way of enhancing the mixing is through the use of draft tubes, as known from example from EP0034739A2 and US10654009B1. In draft tube mixing systems, a usually cylindrical tube open at both ends is disposed vertically inside a reactor, creating a cylindrical space inside the draft tube and a space outside the draft tube.

Typically, the loop reactor comprises at least one draft tube arranged underneath a nozzle through which one or more reactants are injected into the reactor. The draft tube provides a first conduit within the draft tube and an oppositely directed second conduit outside of the draft tube. The reactants injected through the nozzle travel in the first conduit, a mixture comprising the reactants and reaction product is then diverted in the opposite direction in the second conduit, and the mixture is back-mixed with the injected reactants.

The flow pattern generated by the draft tube is a recirculating flow, which may be characterized by the circulation ratio, i.e. the total mass flow through the draft tubes divided by the feed mass flow rate. The total mass flow comprises the feed mass flow and entrained fluid circulating in the reactor. It is generally desirable to generate a high circulation ratio. The circulation ratio is dependent on the pressure loss of the circulating fluid, which in turns depends on fluid properties and the fluid flow pattern. Flow separations may occur, e.g., at the draft tube outlet, which increases the pressure loss and leads to a reduced circulation ratio.

It has been shown that the circulation ratio may be influenced by the choice of the geometric length ratios, i.e. the ratio of reactor diameter and reactor length, and/or the ratio of tube diameter and reactor length. Moreover, the design of the deflection zone, e.g., the shape of draft tube edges, deflectors and internals, and the surface properties of the reactor components has been examined. An overview is provided by Blenke et al., Verfahrenstechnik 3 (1969), p. 444 to 452.

There remains a significant need to enhance the performance of loop reactors.

The invention relates to an internal loop reactor comprising:
- a vertically disposed cylindrical vessel comprising a sidewall;
- at least one draft tube arranged vertically within the vessel, the draft tube(s) having an inner surface and an outer surface, wherein the draft tube(s) provide(s) (a) first conduit(s) within the draft tube(s) having a tube inlet end and a tube outlet end, and a second conduit outside of the draft tube(s) and within the sidewall, the first conduit(s) being in fluid communication with the second conduit;
- at least one nozzle for injecting a fluid into the first conduit(s) from the tube inlet end, wherein the nozzle(s) is/are arranged concentrically to the draft tube(s); and
- reactor fluid outlet means;
   wherein the inner surface of the draft tube(s) convexly curves so that the first conduit(s) exhibit(s) an annular constriction of the cross-section between the tube inlet end and the tube outlet end; wherein the constriction is located closer to the tube inlet end; wherein the convex curvature of the inner surface of the draft tube(s) extends over at least 70% of the length of the draft tube;
   wherein the outer surface of the draft tube(s) convexly curves so that the draft tube(s) exhibit(s) a circumferential protuberance between the tube inlet end and the tube outlet end, which circumferential protuberance is preferably located closer to the tube outlet end; wherein the convex curvature of the outer surface of the draft tube(s) extends over at least 70% of the length of the draft tube; and
   wherein the edges of the draft tube(s) are rounded.

The reactor is configured so that fluid injected through the nozzle(s) travels through the first conduit(s) to obtain a reacted fluid, the reacted fluid is then diverted in the opposite direction so as to travel through the second conduit and is subsequently back-mixed with the injected fluid. It was found that the configuration of the draft tube(s) according to the invention allows control of the boundary layer flowing over the edge of the draft tube. When the angle of attack of a flow with respect to a solid body reaches a certain limit the adverse pressure gradient becomes too large for the flow to negotiate it. At this point, the flow separates from the upper surface of the body, resulting in a condition commonly known as stall. The invention allows for decreased flow separation or a delay in flow separation, respectively. Decreased flow separation allows for reduced liquid friction and thus leads to a lower pressure drop along the streamline of the recirculating flow, which in turn results in a higher circulation ratio of the configuration. The curved shape of the inner surface of the draft tube wall guides the fluid through the draft tube in an optimized manner, comparable to the flow of fluid over an airfoil.

The inner surface of the draft tube curves in the longitudinal direction of the draft tube, or in other words has a convex shape, so that the first conduit exhibits a minimum cross-section between the tube inlet end and the tube outlet end. This means that the cross-section of the first conduit decreases from the cross-section at the tube inlet end to a minimum cross-section and increases from the minimum cross-section to the cross-section at the tube outlet end.

The draft tube has a curved, approximately conical section between the tube inlet end and the constriction, being wide at the inlet end and narrower at the constriction. At least some of the fluid flowing downstream through the draft tube is deflected so as to flow along the inner surface of the draft tube until the draft tube ends. The flow through the tube predominantly remains attached, thus generating less pressure loss. In the vicinity of the constriction, the fluid flowing downstream through the draft tube is accelerated. Between the constriction and the tube outlet end, the cross-sectional area of the draft tube widens again. Consequently, the area variation, in conjunction with mass conservation, will force the velocity through the larger area to be slower than through the smaller one, accompanied by a conversion of the dynamic pressure into static pressure. Acceleration of the fluid flowing downstream through the draft tube in the vicinity of the constriction adds a radial velocity component to the flow, increasing the mixing between circulating flow and injected flow. By avoiding flow separation in this case, no significant pressure loss occurs.

In a first aspect, the loop reactor comprises one draft tube and one nozzle. The inner surface of the draft tube defines the first conduit, and the outer surface of the draft tube and the sidewall of the vessel define the second conduit. In this case, the draft tube is preferably arranged essentially concentrically within the vessel. The nozzle is arranged concentrically to the draft tube.

In a second aspect, the loop reactor comprises a plurality of draft tubes. One nozzle is assigned concentrically to each draft tube. The draft tubes provide first conduits defined by the inner surfaces of the draft tubes, and a second conduit outside of the draft tube and within the sidewall.

The discussion herein relates to both aspects, unless noted otherwise. Embodiments of the first aspect are considered to be especially preferred.

The ratio of the cross-section of the first conduit at the constriction to the cross-section of the first conduit at the tube outlet end is determined by the requirement to avoid flow separation. Said ratio thus depends on the distance between the constriction and the tube outlet end. Preferably, the ratio of the cross-section of the first conduit at the constriction to the cross-section of the first conduit at the tube outlet end is chosen such that the average opening angle α at the tube outlet end is between 5° and 8°. The "opening angle α" denotes the angle between a tangent to the curved inner surface of the draft tube and a tangent to the outer surface.

Herein, the term "cross-section" is understood to relate to the cross-sectional area as defined by the perimeter of the concerned area, unless noted otherwise. Thus, the cross-section of the first conduit is defined by the inner surface of the draft tube. Due to the curved or convex shape of the inner surface of the draft tube, the cross-section of the first conduit varies along the length of the first conduit. The length of the first conduit is understood to relate to the extension in the longitudinal direction of the draft tube.

The draft tube has a constriction between the between the tube inlet end and the tube outlet end so that the cross-section at the constriction is smaller than both the cross-section at the tube inlet end and the cross-section at the tube outlet end. The cross-section of the first conduit at the tube inlet end and the cross-section of the first conduit at the tube outlet end may essentially be the same or vary. In a preferred embodiment, the ratio of the cross-section of the first conduit at the tube inlet end to the cross-section of the first conduit at the tube outlet end is in the range of 0.5 to 3, preferably 1 to 3, more preferably 1 to 1.5, such as approximately 1.

In another preferred embodiment, the ratio of the cross-section of the first conduit at the tube inlet end to the cross-section of the second conduit at the tube outlet end is in the range of 0.5 to 3, preferably 1 to 3, more preferably 1 to 1.5, such as approximately 1. The cross-section of the second conduit is defined by the sidewall of the vertically disposed cylindrical vessel, with the cross-section of the tube inlet end being subtracted. The cross-section of the tube inlet end is understood to include the draft tube wall.

The convex curvature of the inner surface of the draft tube extends over at least 70%, preferably at least 80%, most preferably at least 90% of the length of the draft tube.

The outer surface of the draft tube(s) curves so that the draft tube(s) exhibit(s) a circumferential protuberance or bulge between the tube inlet end and the tube outlet end, which circumferential protuberance is preferably located closer to the tube outlet end. In this embodiment, the draft tube(s) comprise a convex inner surface and a convex outer surface or, in other words, the draft tube(s) has (have) a biconvex longitudinal section.

Thus, in the first aspect, the second conduit exhibits a minimum cross-section between the tube outlet end and the tube inlet end. This means that the cross-section of the second conduit decreases from the cross-section of the tube outlet end to a minimum cross-section and increases from the minimum cross-section to the cross-section of the tube inlet end. This embodiment is especially preferred for reactors of the first aspect.

The circumferential protuberance is preferably located closer to the tube outlet end. In a preferred embodiment, the circumferential protuberance of the draft tube is located within 50% of the length of the draft tube from the tube outlet end, preferably within 20 to 30% of the length of the draft tube from the tube outlet end.

In a preferred embodiment, the ratio of the outer cross-section of the draft tube at the tube outlet end to the maximum cross-section of the protuberance is in the range of 0.3 to 1, preferably 0.5 to 1.

The convex curvature of the outer surface of the draft tube extends over at least 70%, preferably at least 80%, most preferably at least 90% of the length of the draft tube.

The draft tube(s) is (are) fixed in the reactor via, e.g., one or more girders or cross beams. Favorably, the means for fixing the draft tube(s) in the reactor stabilize the draft tube(s) while offering a minimum of flow resistance. For example, it is preferable that the volume of the means for fixing the draft tube(s) in the reactor is as small as possible.

In order to allow for an even distribution of fluid flow throughout the reactor, the spacing between the sidewall of the reactor and the draft tube(s) may be adjusted. For instance, when the space between the sidewall of the reactor and the draft tube(s) is too large, most of the fluid may flow along the walls, while only a small amount of fluid flows through the central part of the reactor. This may lead to an uneven degree of mixing within the second conduit. The positioning of the nozzle and accordingly the draft tube(s) thus directly affects the mixing efficiency in the reactor.

The optimum spacing between the sidewalls of the reactor and the draft tube(s) depends on a variety of parameters, such as the reaction volume, the length and number of the draft tubes and the circulation ratio of the reactor. It is preferable that the spacing allows the circulating reaction mixture to be drawn into the tube inlet end(s) at an essentially uniform rate from all sides.

In one embodiment, openings are provided in the wall (or lateral area) of the draft tube(s). The openings allow cross flow of fluid through the draft tube wall(s) without traveling through either end of the draft tube. The openings thus advantageously reduce the loss of pressure upon entry of the fluid flow into the draft tube and reduce flow separation. Further, the openings induce turbulence and thus improve the mixing efficiency of the reactor. The openings are typically arranged in the upper part of the draft tube.

The openings may be perforations of many different shapes including rectangles and circles and are of a size and position that allows the desired level of cross flow through the draft tube wall without significantly degrading the axial flow of fluid through the draft tube. From a viewpoint of ease of manufacture, the openings are preferably slits. In the broader embodiment of the invention, the specific shape and pattern of the openings is not particularly limited and will most likely be chosen according to ease (or cost) of manufacture. Simple geometric shapes including rectangles, squares, circles, and ovals are some preferred examples. The openings may comprise turbulence-enhancing geometric variations, such as spikes.

The draft tube is designed so as to sustain the pressure in the reactor during operation of the reactor, as well as at start-up and at shutdown of the reactor. When the reaction to be carried out in the reactor requires high pressure, the draft tube typically comprises a solid wall, or a hollow wall with ventilation openings for pressure compensation. The manufacturing method of the draft tube must be chosen such that the curvature of the profile is reproduced with high accuracy, preferably by 3D printing and/or sintering.

The reactor comprises a nozzle for injecting a fluid into the first conduit via the tube inlet end. In one embodiment, the nozzle is arranged for injecting the fluid into the first conduit in a generally downward direction, the draft tube is arranged essentially concentrically beneath the nozzle, the first conduit is a downcomer conduit and the second conduit is a riser conduit. Preferably, the nozzle is arranged in the lid of the reactor. In order to allow for a high degree of mixing and to avoid dead zones, the nozzle should be flush with the lid.

In another embodiment, the nozzle is arranged for injecting the fluid into the first conduit in a generally upward direction, the draft tube is arranged essentially concentrically above the nozzle, the first conduit is a riser conduit and the second conduit is a downcomer conduit. Preferably, the nozzle is arranged in the bottom of the reactor. In order to allow for a high degree of mixing and to avoid dead zones, the nozzle should be flush with the bottom of the reactor.

The nozzle may be a one-component or a two-component nozzle. In a one-component nozzle, only one fluid is injected via the nozzle. One-component nozzles exhibit the advantage of having a simple structure. In a two-component nozzle, two fluids are separately injected via the nozzle and mixed only after exiting the nozzle.

In a preferred embodiment, the nozzles are two-component nozzles. Such a two-component nozzle may for example be designed so as to provide an annular jet of a first reactant around a central jet of a second reactant. The injection velocities of these two jets may be the same or different. Preferably, the injection velocities are different, so as to provide a high degree of turbulence and hence, a high degree of mixing.

It is especially preferable that a two-component nozzle is designed so as to provide an annular jet of a first reactant around a central jet of a second reactant, and that the injection velocities of these two jets are different. In this embodiment, the jet of the first reactant has a large shear surface towards both the central jet of the second reactant and the reaction mixture in the reactor, allowing for favorable fast mixing of the reactants.

In a preferred embodiment, the ratio of the injection velocity of the second reactant to the injection velocity of the first reactant is in the range of 4:1 to 6:1, preferably 4.5:1 to 5.5:1, such as 5:1. For example, the injection velocity of the first reactant may be about 10 to 30 m/s, preferably 15 to 20 m/s. The injection velocity of the second reactant may be about 70 to 100 m/s, preferably 80 to 90 m/s.

In the second aspect, the loop reactor comprises a plurality of draft tubes, with one nozzle being assigned concentrically to each draft tube. In this aspect, the nozzles are preferably operated in parallel. The parallel arrangement of a plurality of nozzles allows for an increased throughput while retaining adequate fluid mixing of the reaction mixture as compared to a single nozzle. Preferably, a multitude of nozzles are arranged around a central nozzle. For example, three or more nozzles, such as four, five, or most preferably six nozzles, are arranged around a central nozzle. Preferably, three or more nozzles, such as four, five, or most preferably six nozzles, are arranged concentrically around a central nozzle.

The design of the deflection zones, e.g., the shape of draft tube edges and the presence and shape of deflector means may be varied so as to allow for a high circulation ratio at low pressure drop.

In a preferred embodiment, the loop reactor comprises deflector means arranged between the nozzle and the draft tube, the deflector means being suitable for deflecting fluid travelling in the second conduit in the opposite direction.

The deflector means suitably comprise a surface which is concave relative to the end of the draft tube which defines the tube inlet end. In a preferred embodiment, the deflector means have a partial toroidal surface. It is especially preferred that the deflector means are provided in the shape of the upper portion of a ring torus bisected in a plane parallel to the toroidal direction. This shape allows for an especially efficient deflection of the fluid travelling in the second conduit. The deflector means may allow for a stabilization of the injected fluid stream. This is especially relevant when the flow rate of the fluid travelling in the second conduit is not uniform across the cross section of the reactor, which may lead to an eccentricity of the injected fluid stream. Such an eccentricity may cause a decrease in circulation ratio if left unattended.

When the first conduit is downcomer conduit and the second conduit is a riser conduit, it is preferred that the shape of the deflector means constitutes the upper portion of a ring torus bisected in a plane parallel to the toroidal direction, wherein the ring torus is bisected at at least 50% of its height, such as at least 55% or 65% of its height. Thus, the upper portion of the ring torus is the same size or smaller than the lower portion of the ring torus. In another preferred embodiment, the shape of the deflector means constitutes the upper portion of a ring torus bisected in a plane parallel to the toroidal direction wherein the ring torus is bisected at at most 85% of its height, for example 80% of its height. In these ranges, the entry of the deflector means is angled especially suitable for fluid deflection.

When the first conduit is a riser conduit and the second conduit is a downcomer conduit, it is preferred that the shape of the deflector means constitutes the lower portion of a ring torus bisected in a plane parallel to the toroidal direction, wherein the ring torus is bisected at at most 50% of its height, such as at most 45% or 35% of its height. Thus, the lower portion of the ring torus is the same size or smaller than the upper portion of the ring torus. In another preferred embodiment, the shape of the deflector means constitutes the lower portion of a ring torus bisected in a plane parallel to the toroidal direction wherein the ring torus is bisected at at least 15% of its height, for example 20% of its height. In these ranges, the entry of the deflector means is angled especially suitable for fluid deflection.

Preferably, the deflector means are not attached to the reactor lid or the reactor bottom, but are arranged so that a gap between the reactor and the deflector means sufficiently large enough to avoid dead zones exists. For example, when the nozzle is arranged for injecting the fluid into the first conduit in a generally downward direction, the gap between the reactor lid and the deflector means is at least 15 mm, such as at least 20 mm. Similarly, when the nozzle is arranged for injecting the fluid into the first conduit in a generally upward direction, the gap between the reactor bottom and the deflector means is at least 15 mm, such as at least 20 mm. In a preferred embodiment, the deflector means are attached to the draft tube.

The loop reactor allows for a high circulation ratio. The circulation ratio is understood to be the total mass flow through the mixing drafts divided by the feed mass flow rate. The total mass flow comprises the feed mass flow and entrained fluid circulating in the reactor. With a circulation ratio of more than 10:1, the system favorably approaches continuous stirred-tank reactor (CSTR) behavior. Preferably, the circulation ratio is at least 15:1, preferably more than 20:1.

As discussed above, the first conduit is defined by the inner surface of the draft tube and its length corresponds to the distance shortest between the tube inlet end and the tube outlet end. Likewise, the second conduit is defined by the outer surface of the draft tube and its length corresponds to the shortest distance between the tube outlet end and the tube inlet end. Thus, the edges of the draft tube limit the extension of the first and second conduits. The edges of the draft tube are rounded, which is understood to mean that the edges of the draft tube do not comprise sharp edges and smoothly follow the curvature of the inner surface and the outer surface of the draft tube(s), respectively. The rounded edges help the mixture of reactants and reaction product to adhere to the surface when it is deflected in the opposite direction. Such a draft tube design allows for a low pressure drop, and hence a high circulation ratio.

The invention further relates to a process for performing a continuous high-pressure reaction, wherein a fluid is introduced into a loop reactor as described above, and a reacted fluid is removed via the fluid outlet of the loop reactor.

The internal loop reactor of the invention is useful in reaction processes requiring effective mixing of gas-liquid or liquid-liquid materials, uniform distribution of a gas or liquid in a liquid phase, high flow rate of the liquid along a specified direction and high mass transfer rates. It is particularly useful for reactions in which mass transfer is a controlling step of the overall reaction process, or high temperature, high pressure reaction systems.

A specific example of a commercial process is a process for producing isoprenol (3-methyl-3-buten-1-ol) by reaction of a formaldehyde source, such as aqueous formaldehyde, and isobutylene.

While initial rapid and intense mixing of reactants is desirable, it may be advantageous to continue and complete the reaction under conditions of limited back-mixing. Thus, the reaction mixture may be passed into a post-reaction chamber disposed after the reactor of the invention. In the post-reaction chamber, back-mixing is limited.

The draft tube shape can be controlled to improve the fluid dynamics of the overall reactor. By optimizing the shape of the draft tube, higher circulation ratios can be accomplished to obtain maximum mixing efficiency. The maximum thickness, the maximum length, the position of the annular constriction, and/or optionally the position of the circumferential protuberance are among the parameters that can be controlled to achieve these results.

In order to limit the computational demand of the optimization, the method may involve selection of a predefined airfoil shape. This airfoil shape is subsequently numerically optimized by means of various design variables or parameters that describe the airfoil shape.

Preferably, the predefined airfoil shape is selected from NACA (National Advisory Committee for Aeronautics) airfoils, the shape of which is described using a series of digits. The digits in the numerical code can be entered into specific equations to precisely generate the cross-section of the airfoil and to calculate its properties. Accordingly, the NACA four-digit wing sections define the profile by a first digit describing maximum camber as percentage of the chord, a second digit describing the distance of maximum camber from the airfoil leading edge in tenths of the chord, and the last two digits describing the maximum thickness of the airfoil as percent of the chord. For example, the NACA2412 airfoil has a maximum camber of 2%, located 40% (i.e., 0.4 chords) from the leading edge, with a maximum thickness of 12% of the chord.

Suitable NACA airfoils include symmetric or only slightly asymmetric airfoils, such as 4-digit airfoils of the types NACA 0XXX to NACA 2XXX, and airfoils having a thickness in the range of 10 to 20% of the airfoil's length, such as 4-digit airfoils of the types NACA XX10 to NACA XX20. A particularly preferred type of airfoil is NACA 2412.

The choice of maximum profile depends on the ratio of length to thickness of the reactor and draft tube design. Minor changes at the leading and trailing edge of the profile are viable to the extent of up to 20% of the length and may be necessary to "marry" the inner and outer profile shape of the tube.

The design of the draft tube may be optimized by the following steps:
1) choosing a standard profile description of an airfoil, in particular an airfoil selected from the group of NACA 0XXX to NACA 2XXX or NACA XX10 to NACA XX20, preferably NACA 2412;
2) scaling the profile according to the design dimensions of the reactor;
3) assuming a half profile of the airfoil for the inner surface of the draft tube, with the leading edge of the profile pointing toward the nozzle; and
   assuming a half profile of the airfoil for the outer surface of the draft tube, with the trailing edge pointing toward the nozzle, wherein changes at the leading and trailing edge of the profile are viable to the extent of up to 20% of the length;
4) optimizing the shape of the draft tube via computational fluid dynamics by varying parameters that describe the airfoil shape to reach the highest circulation ratio.

Comparative computational fluid dynamics, taking into account the reaction kinetics of the reactor, may be used to validate the selectivity and conversion rate obtained by the optimized design. Calibration of the reaction kinetics may be based on known selectivity and conversion rates from existing reactor configurations.

The invention is illustrated in detail by the appended drawings and examples.
Fig. 1 is a schematic diagram of the side view of a comparative loop reactor.
Fig. 2 is a schematic diagram of the side view of a loop reactor according to the invention.
Fig. 3 is a schematic diagram of the side view of a further loop reactor according to the invention.
Fig. 4 is a schematic diagram of the top view of the deflector means shown in Fig. 3.
Fig. 5 is a schematic excerpt of the flow pattern in a known internal loop reactor having a cylindrical draft tube, as obtained via CFD calculations.
Fig. 6 is a schematic excerpt of the flow pattern in an internal loop reactor according to the invention, as obtained via CFD calculations.

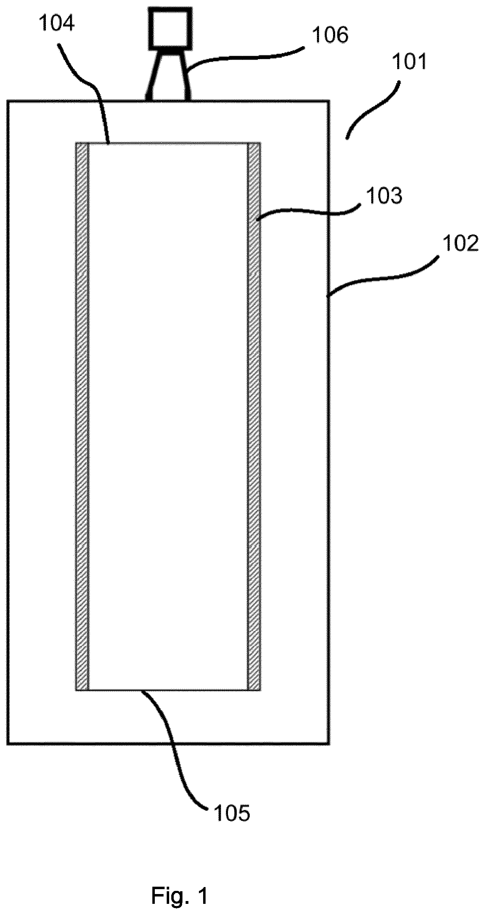

According to Fig. 1, reactor 101 comprises a vertically disposed cylindrical vessel 102 comprising a sidewall and a draft tube 103 arranged vertically and concentrically within the vessel. The draft tube has a tube inlet end 104 and a tube outlet end 105, and an inner surface and an outer surface. The draft tube provides a first conduit 103 within the draft tube, and a second conduit outside of the draft tube 103 and within the sidewall, the first conduit being in fluid communication with the second conduit.

Reactor 101 further comprises a nozzle 106 for injecting a fluid into the first conduit from the tube inlet end 104. The nozzle is arranged concentrically above the draft tube 103. The reactor is designed so that the draft tube 103 provides a downcomer conduit within the draft tube 103 and a riser conduit outside of the draft tube 103 when the fluid is injected through the nozzle 106.

The reactor comprises reactor fluid outlet means (not shown in Fig. 1) through which a reaction product is guided out of the reactor and may be subjected to further processing.

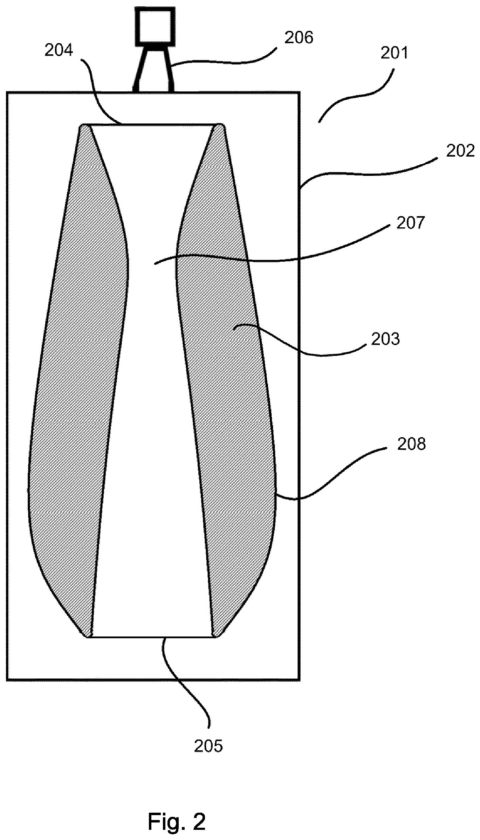

According to Fig. 2, reactor 201 comprises a vertically disposed cylindrical vessel 202 comprising a sidewall and a draft tube 203 arranged vertically and concentrically within the vessel. The draft tube has a tube inlet end 204 and a tube outlet end 205, and an inner surface and an outer surface.

Reactor 201 further comprises a nozzle 206 for injecting a fluid into the first conduit from the tube inlet end 204. The nozzle is arranged concentrically above the draft tube 203. The reactor is designed so that the draft tube 203 provides a downcomer conduit within the draft tube 203 and a riser conduit outside of the draft tube 203 when the fluid is injected through the nozzle 206.

The inner surface of the draft tube 203 curves so that the first conduit exhibits a constriction 207 of the cross-section. The outer surface of the draft tube 203 curves so that the draft tube 203 exhibits a circumferential protuberance 208 which is located closer to the tube outlet end 205. The draft tube provides a first conduit within the draft tube 203, and a second conduit outside of the draft tube 203 and within the sidewall, the first conduit being in fluid communication with the second conduit.

The reactor comprises reactor fluid outlet means (not shown in Fig. 2) through which a reaction product is guided out of the reactor and may be subjected to further processing.

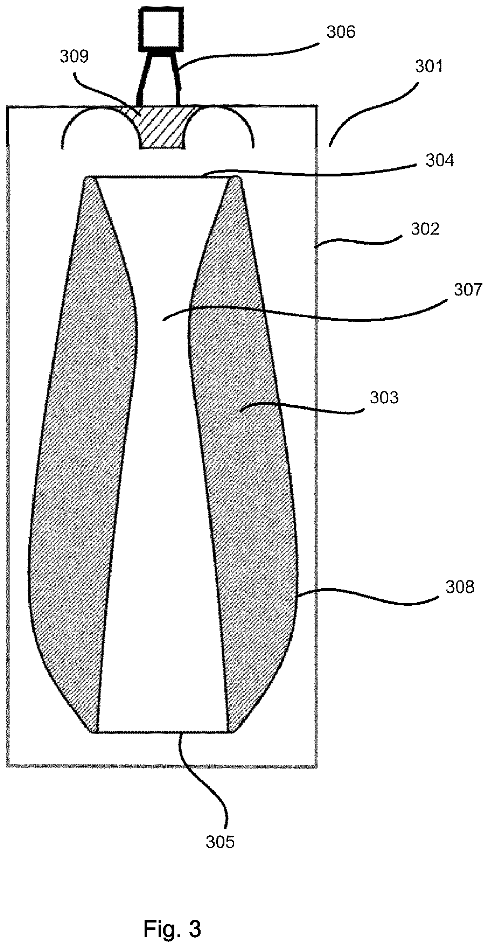

According to Fig. 3, reactor 301 comprises a vertically disposed cylindrical vessel 302 comprising a sidewall and a draft tube 303 arranged vertically and concentrically within the vessel. The draft tube has a tube inlet end 304 and a tube outlet end 305, and an inner surface and an outer surface.

Reactor 301 further comprises a nozzle 306 for injecting a fluid into the first conduit from the tube inlet end 304. The nozzle is arranged concentrically above the draft tube 303. The reactor is designed so that the draft tube 303 provides a downcomer conduit within the draft tube 303 and a riser conduit outside of the draft tube 203 when the fluid is injected through the nozzle 306.

The inner surface of the draft tube 303 curves so that the first conduit exhibits a constriction 307 of the cross-section. The outer surface of the draft tube 303 curves so that the draft tube 303 exhibits a circumferential protuberance 308 which is located closer to the tube outlet end 305. The draft tube provides a first conduit within the draft tube 303, and a second conduit outside of the draft tube 303 and within the sidewall, the first conduit being in fluid communication with the second conduit.

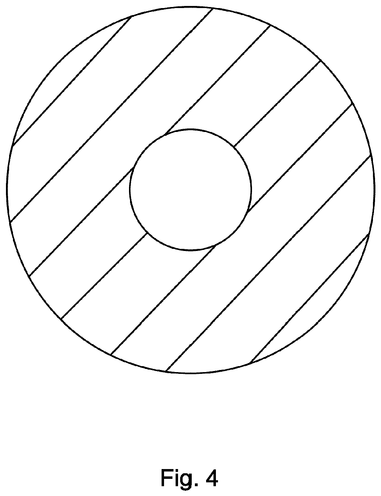

Moreover, reactor 301 comprises deflector means 309 in the shape of the upper portion of a ring torus bisected in a plane parallel to the toroidal direction, the top view of which is shown in Fig. 4. The deflector means 309 are designed so as to deflect the fluid travelling upward in the riser conduit in a downward direction so as to back-mix the fluid with the injected fluid.

The reactor comprises reactor fluid outlet means (not shown in Fig. 3) through which a reaction product is guided out of the reactor and may be subjected to further processing.

### Examples

Internal loop reactors were evaluated by means of computational fluid dynamics simulations with regard to the circulation ratio, i.e., the total mass flow through the mixing drafts divided by the feed mass flow rate, and the selectivity of the reaction. The total mass flow comprises the feed mass flow and entrained fluid circulating in the reactor. For the calculation, a commercial CFD code (ANSYS FLUENT) based on the Finite-Volume-Method was used. Numerical submodels were used to take into account turbulence as well as temperature- and mixture-dependent materials properties. Boundary conditions were taken from actual unit design conditions. The shape of the draft tube was optimized by varying parameters that describe the airfoil shape to reach the highest circulation ratio, as described above.

### Example 1 (Comparative)

An internal loop reactor having a cylindrical draft tube arranged underneath a nozzle through which isobutylene and formaldehyde are injected into the upper part of the reactor is assumed. The upper part of the reactor, constituting a mixing chamber, is arranged above a post-reaction chamber disposed in the lower part of the reactor. The mixing chamber and the post-reaction chamber are separated by a perforated plate.

For the reactor, a height of the mixing compartment of about 5 m, a diameter of the reactor of about 1.4 m, and a length of the draft tube of about 3.5 m was assumed.

It was assumed that aqueous formaldehyde (40 wt.-%) and supercritical isobutylene are injected into the reactor having a pressure of 250 bara and a temperature of 270 °C.

The reactor allowed for a circulation ratio of 20 (at 100% design load). A reaction selectivity of 70% within the mixing compartment of the reactor was calculated.

At a design load of 50%, the reactor allowed for a circulation ratio of about 30.

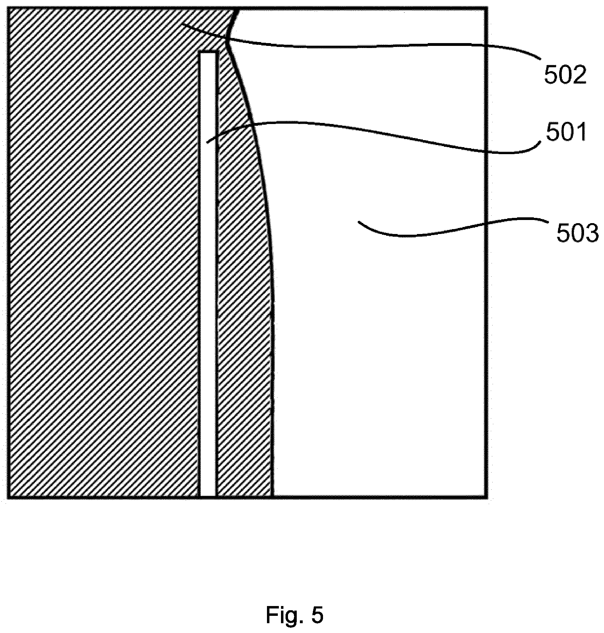

The flow pattern of this reactor, as obtained by CFD calculations, is shown in Fig. 5, which depicts a radial cross-section from the center axis of the draft tube (right-hand edge of Fig. 5). The upper portion of the draft tube wall, including the upper edge, is indicated as 501. The hatched area 502 indicates a net upward flow. The unmarked area 503 indicates net downward flow.

The flow pattern shows a net upward flow outside the draft tube. Within the draft tube, there is a net downward flow 502. However, along the inner wall of the draft tube, there is a significant net upward flow. This is indicative of flow separation leading to a dead zone, which increases pressure loss and leads to a reduced circulation ratio.

### Example 2

An internal loop reactor according to the invention is assumed, having a draft tube arranged underneath a nozzle through which isobutylene and formaldehyde into the upper part of the reactor. The design of the draft tube was optimized according to the steps discussed above, wherein NACA 2412 was chosen as the standard profile description of an airfoil. The upper part of the reactor, constituting a mixing chamber, is arranged above a post-reaction chamber disposed in the lower part of the reactor. The mixing chamber and the post-reaction chamber are separated by a perforated plate.

For the reactor, a height of the mixing compartment of about 5 m, a diameter of the reactor of about 1.4 m, and a length of the draft tube of about 3.2 m was assumed. The draft tube was shaped according to the invention.

It was assumed that aqueous formaldehyde (40 wt.-%) and supercritical isobutylene are injected into the reactor having a pressure of 250 bara and a temperature of 270 °C.

The reactor allowed for a circulation ratio of 30 (at 100% design load). A reaction selectivity of 70 to 75% within the mixing compartment of the reactor was calculated.

At a design load of 50%, the reactor allowed for a circulation ratio of about 50.

It is evident that the reactor according to the invention allows for an improved circulation ratio and higher selectivities.

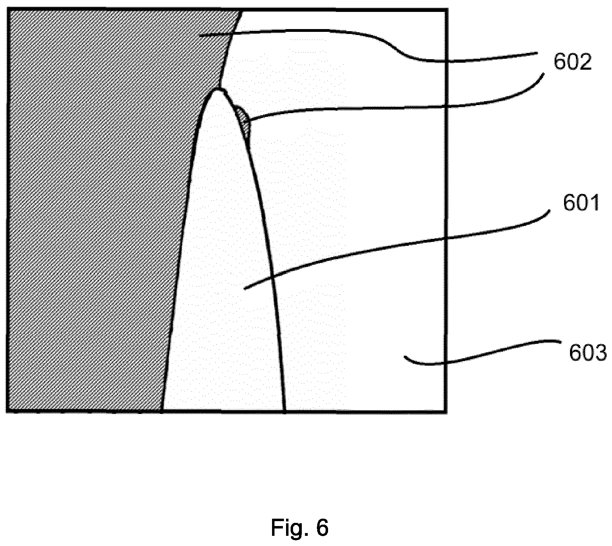

The flow pattern of this reactor, as obtained by CFD calculations, is shown in Fig. 6, which depicts a radial cross-section from the center axis of the draft tube (right-hand edge of Fig. 6). The upper portion of the draft tube wall, including the upper edge, is indicated as 601. The hatched areas 602 indicate a net upward flow. The unmarked area 603 indicates net downward flow.

The flow pattern shows a net upward flow outside the draft tube. Within the draft tube, there is a net downward flow 602. Along the inner wall of the draft tube, there is only a negligible zone of net upward flow. This is indicative of essentially no flow separation. Thus, a higher circulation ratio and better mixing of the reactants are achieved, which in turn allows for higher selectivity.

## Claims

1. An internal loop reactor (201) comprising:
- a vertically disposed cylindrical vessel (202) comprising a sidewall;
- at least one draft tube (203) arranged vertically within the vessel, the draft tube(s) (203) having an inner surface and an outer surface, wherein the draft tube(s) (203) provide(s) (a) first conduit(s) within the draft tube(s) (203) having a tube inlet end (204) and a tube outlet end (205), and a second conduit outside of the draft tube(s) (203) and within the sidewall, the first conduit(s) being in fluid communication with the second conduit;
- at least one nozzle (206) for injecting a fluid into the first conduit(s) from the tube inlet end (204), wherein the nozzle(s) (206) is/are arranged concentrically to the draft tube(s) (203); and
- reactor fluid outlet means;
wherein the inner surface of the draft tube(s) (203) convexly curves so that the first conduit(s) exhibit(s) an annular constriction (207) of the cross-section between the tube inlet end (204) and the tube outlet end (205); wherein the constriction is located closer to the tube inlet end (204); wherein the convex curvature of the inner surface of the draft tube(s) (203) extends over at least 70%, preferably at least 80%, most preferably at least 90% of the length of the draft tube; and
wherein the outer surface of the draft tube(s) (203) convexly curves so that the draft tube(s) (203) exhibit(s) a circumferential protuberance (208) between the tube inlet end (204) and the tube outlet end (205), which circumferential protuberance (208) is preferably located closer to the tube outlet end (205); wherein the convex curvature of the outer surface of the draft tube(s) (203) extends over at least 70%, preferably at least 80%, most preferably at least 90% of the length of the draft tube; and
wherein the edges of the draft tube(s) (203) are rounded.

2. The reactor (201) according to claim 1 or 2, wherein the ratio of the cross-section of the first conduit at the constriction to the cross-section of the first conduit at the tube outlet end (205) is chosen such that the average opening angle α at the tube outlet end (205) is between 5° and 8°.

3. The reactor (201) according to any of the preceding claims, wherein the ratio of the cross-section of the first conduit at the tube inlet end (204) to the cross-section of the first conduit at the tube outlet end (205) is in the range of 0.5 to 3.

4. The reactor (201) according to any of the preceding claims, wherein the ratio of the cross-section of the first conduit at the tube inlet end (204) to the cross-section of the second conduit at the tube outlet end (205) is in the range of 0.5 to 3.

5. The reactor (201) according to any of the preceding claims, wherein the ratio of the outer cross-section of the draft tube at the tube outlet end (205) to the maximum cross-section of the protuberance (208) is in the range of 0.3 to 1.

6. The reactor (201) according to any of the preceding claims, which comprises one draft tube (203) arranged concentrically within the vessel, and one nozzle (206) arranged concentrically to the draft tube (203).

7. The reactor (201) according to any of claims 1 to 5, which comprises a plurality of draft tubes (203) with one nozzle (206) being assigned concentrically to each draft tube (203).

8. The reactor (301) according to any of the preceding claims, further comprising deflector means (309) arranged between the nozzle (306) and the draft tube (308), the deflector means (309) being suitable for deflecting fluid travelling in the second conduit in the opposite direction, wherein the deflector means (309) have a partial toroidal surface.

9. The reactor (201) according to any of the preceding claims, wherein the nozzle (206) is arranged for injecting the fluid into the first conduit in a generally downward direction, the draft tube (203) is arranged essentially concentrically beneath the nozzle (206), the first conduit is a downcomer conduit and the second conduit is a riser conduit.

10. The reactor (201) according to any of claims 1 to 8, wherein the nozzle (203) is arranged for injecting the fluid into the first conduit in a generally upward direction, the draft tube (203) is arranged essentially concentrically above the nozzle (206), the first conduit is a riser conduit and the second conduit is a downcomer conduit.

11. A process for performing a continuous high-pressure reaction, wherein a fluid is introduced into an internal loop reactor (201) according to any of the preceding claims, and a reacted fluid is removed via the fluid outlet of the loop reactor (201).

## Patentansprüche

1. Interner Schlaufenreaktor (201) umfassend:
- ein vertikal angeordnetes zylindrisches Gefäß (202), das eine Seitenwand umfasst;
- wenigstens ein Saugrohr (203), das vertikal in dem Gefäß angeordnet ist, wobei die Saugrohr(e) (203) eine Innenfläche und eine Außenfläche aufweisen, wobei die Saugrohr(e) (203) (a) erste Leitung(en) innerhalb der Saugrohr(e) (203) mit einem Rohreinlassende (204) und einem Rohrauslassende (205) und eine zweite Leitung außerhalb der Saugrohre(e) (203) und innerhalb der Seitenwand bereitstellen, wobei die ersten Leitung(en) in Fluidverbindung mit der zweiten Leitung vorliegen;
- wenigstens eine Düse (206) zum Einspritzen eines Fluids in die erste(n) Leitung(en) von dem Rohreinlassende (204), wobei die Düse(n) (206) konzentrisch zu den Saugrohr (en) (203) angeordnet ist/sind; und
- Reaktorfluidauslassmittel;
wobei die Innenfläche der Saugrohr(e) (203) konvex gekrümmt ist, so dass die erste(n) Leitung(en) eine ringförmige Verengung (207) des Querschnitts zwischen dem Rohreinlassende (204) und dem Rohrauslassende (205) aufweisen; wobei die Verengung näher an dem Rohreinlassende (204) angeordnet ist; wobei sich die konvexe Krümmung der Innenfläche der Saugrohr(e) (203) über wenigstens 70 %, vorzugsweise wenigstens 80 %, höchst bevorzugt wenigstens 90 % der Länge des Saugrohrs erstreckt; und
wobei die Außenfläche der Saugrohr(e) (203) konvex gekrümmt ist, so dass die Saugrohr(e) (203) eine umlaufende Ausbauchung (208) zwischen dem Rohreinlassende (204) und dem Rohrauslassende (205) aufweisen, wobei die umlaufende Ausbauchung (208) vorzugsweise näher an dem Rohrauslassende (205) angeordnet ist; wobei sich die konvexe Krümmung der Außenfläche der Saugrohr(e) (203) über wenigstens 70 %, vorzugsweise wenigstens 80 %, höchst bevorzugt wenigstens 90 % der Länge des Saugrohrs erstreckt; und
wobei die Kanten der Saugrohr(e) (203) abgerundet sind.

2. Reaktor (201) nach Anspruch 1 oder 2, wobei das Verhältnis des Querschnitts der ersten Leitung an der Verengung zu dem Querschnitt der ersten Leitung an dem Rohrauslassende (205) so ausgewählt ist, dass der mittlere Öffnungswinkel α an dem Rohrauslassende (205) zwischen 5° und 8° beträgt.

3. Reaktor (201) nach einem der vorstehenden Ansprüche, wobei das Verhältnis des Querschnitts der ersten Leitung an dem Rohreinlassende (204) zu dem Querschnitt der ersten Leitung an dem Rohrauslassende (205) in dem Bereich von 0,5 bis 3 liegt.

4. Reaktor (201) nach einem der vorstehenden Ansprüche, wobei das Verhältnis des Querschnitts der ersten Leitung an dem Rohreinlassende (204) zu dem Querschnitt der zweiten Leitung an dem Rohrauslassende (205) in dem Bereich von 0,5 bis 3 liegt.

5. Reaktor (201) nach einem der vorstehenden Ansprüche, wobei das Verhältnis des Außenquerschnitts des Saugrohrs an dem Rohrauslassende (205) zu dem größten Querschnitt der Ausbauchung (208) in dem Bereich von 0,3 bis 1 liegt.

6. Reaktor (201) nach einem der vorstehenden Ansprüche, umfassend ein Saugrohr (203), das konzentrisch in dem Gefäß angeordnet ist, und eine Düse (206), die konzentrisch zu dem Saugrohr (203) angeordnet ist.

7. Reaktor (201) nach einem der Ansprüche 1 bis 5, umfassend eine Vielzahl von Saugrohren (203), wobei jedem Saugrohr (203) eine Düse (206) konzentrisch zugeordnet ist.

8. Reaktor (301) nach einem der vorstehenden Ansprüche, ferner umfassend Ablenkmittel (309) zwischen der Düse (306) und dem Saugrohr (308) angeordnet, wobei die Ablenkmittel (309) geeignet sind, Fluid, das sich in der zweiten Leitung bewegt, in die entgegengesetzte Richtung abzulenken, wobei die Ablenkmittel (309) eine teilweise toroidale Oberfläche aufweisen.

9. Reaktor (201) nach einem der vorstehenden Ansprüche, wobei die Düse (206) zum Einspritzen des Fluids in die erste Leitung in einer allgemein nach unten gerichteten Richtung angeordnet ist, das Saugrohr (203) im Wesentlichen konzentrisch unter der Düse (206) angeordnet ist, die erste Leitung eine Fallleitung ist und die zweite Leitung eine Steigleitung ist.

10. Reaktor (201) nach einem der Ansprüche 1 bis 8, wobei die Düse (203) zum Einspritzen des Fluids in die erste Leitung in einer allgemein nach oben gerichteten Richtung angeordnet ist, das Saugrohr (203) im Wesentlichen konzentrisch über der Düse (206) angeordnet ist, die erste Leitung eine Steigleitung ist und die zweite Leitung eine Fallleitung ist.

11. Verfahren zum Durchführen einer kontinuierlichen Hochdruckreaktion, wobei ein Fluid in einen internen Schlaufenreaktor (201) nach einem der vorstehenden Ansprüche eingeführt wird und ein reagiertes Fluid über den Fluidauslass des Schlaufenreaktors (201) entfernt wird.

## Revendications

1. Réacteur à boucle interne (201) comprenant :
- une cuve cylindrique (202) disposée verticalement comprenant une paroi latérale ;
- au moins un tube d'aspiration (203) agencé verticalement à l'intérieur de la cuve, le(s) tube(s) d'aspiration (203) ayant une surface interne et une surface externe, le(s) tube(s) d'aspiration (203) fournissant (a) un ou des premier(s) conduit(s) à l'intérieur du ou des tube(s) d'aspiration (203) ayant une extrémité d'entrée de tube (204) et une extrémité de sortie de tube (205), et un deuxième conduit à l'extérieur du ou des tube(s) d'aspiration (203) et à l'intérieur de la paroi latérale, le(s) premier(s) conduit(s) étant en communication fluidique avec le deuxième conduit ;
- au moins une buse (206) pour injecter un fluide dans le(s) premier(s) conduit(s) à partir de l'extrémité d'entrée de tube (204), la ou les buse(s) (206) étant agencée(s) de manière concentrique par rapport au(x) tube(s) d'aspiration (203) ; et
- des moyens de sortie de fluide de réacteur ;
dans lequel la surface interne du ou des tube(s) d'aspiration (203) s'incurve de manière convexe de sorte que le(s) premier(s) conduit(s) présente(nt) un étranglement annulaire (207) de la section transversale entre l'extrémité d'entrée de tube (204) et l'extrémité de sortie de tube (205) ; dans lequel l'étranglement est situé plus près de l'extrémité d'entrée de tube (204) ; dans lequel la courbure convexe de la surface interne du ou des tube(s) d'aspiration (203) s'étend sur au moins 70 %, préférablement au moins 80 %, le plus préférablement au moins 90 % de la longueur du tube d'aspiration ; et
dans lequel la surface externe du ou des tube(s) d'aspiration (203) s'incurve de manière convexe de sorte que le(s) tube(s) d'aspiration (203) présente(nt) une protubérance circonférentielle (208) entre l'extrémité d'entrée de tube (204) et l'extrémité de sortie de tube (205), laquelle protubérance circonférentielle (208) est préférablement située plus près de l'extrémité de sortie de tube (205) ; dans lequel la courbure convexe de la surface externe du ou des tube(s) d'aspiration (203) s'étend sur au moins 70 %, préférablement au moins 80 %, le plus préférablement au moins 90 % de la longueur du tube d'aspiration ; et
dans lequel les bords du ou des tube(s) d'aspiration (203) sont arrondis.

2. Réacteur (201) selon la revendication 1 ou la revendication 2, dans lequel le rapport de la section transversale du premier conduit au niveau de l'étranglement à la section transversale du premier conduit au niveau de l'extrémité de sortie de tube (205) est choisi de telle sorte que l'angle d'ouverture moyen α au niveau de l'extrémité de sortie de tube (205) soit compris entre 5° et 8°.

3. Réacteur (201) selon l'une quelconque des revendications précédentes, dans lequel le rapport de la section transversale du premier conduit au niveau de l'extrémité d'entrée de tube (204) à la section transversale du premier conduit au niveau de l'extrémité de sortie de tube (205) est dans la plage de 0,5 à 3.

4. Réacteur (201) selon l'une quelconque des revendications précédentes, dans lequel le rapport de la section transversale du premier conduit au niveau de l'extrémité d'entrée de tube (204) à la section transversale du deuxième conduit au niveau de l'extrémité de sortie de tube (205) est dans la plage de 0,5 à 3.

5. Réacteur (201) selon l'une quelconque des revendications précédentes, dans lequel le rapport de la section transversale externe du tube d'aspiration au niveau de l'extrémité de sortie de tube (205) à la section transversale maximale de la protubérance (208) est dans la plage de 0,3 à 1.

6. Réacteur (201) selon l'une quelconque des revendications précédentes, qui comprend un tube d'aspiration (203) agencé de manière concentrique à l'intérieur de la cuve, et une buse (206) agencée de manière concentrique par rapport au tube d'aspiration (203).

7. Réacteur (201) selon l'une quelconque des revendications 1 à 5, qui comprend une pluralité de tubes d'aspiration (203), une buse (206) étant assignée de manière concentrique à chaque tube d'aspiration (203).

8. Réacteur (301) selon l'une quelconque des revendications précédentes, comprenant en outre un moyen déflecteur (309) agencé entre la buse (306) et le tube d'aspiration (308), le moyen déflecteur (309) étant approprié pour dévier le fluide circulant dans le deuxième conduit dans la direction opposée, le moyen déflecteur (309) ayant une surface toroïdale partielle.

9. Réacteur (201) selon l'une quelconque des revendications précédentes, dans lequel la buse (206) est agencée pour injecter le fluide dans le premier conduit dans une direction généralement vers le bas, le tube d'aspiration (203) est agencé essentiellement de manière concentrique sous la buse (206), le premier conduit est un conduit de descente et le deuxième conduit est un conduit de montée.

10. Réacteur (201) selon l'une quelconque des revendications 1 à 8, dans lequel la buse (203) est agencée pour injecter le fluide dans le premier conduit dans une direction généralement vers le haut, le tube d'aspiration (203) est agencé essentiellement de manière concentrique au-dessus de la buse (206), le premier conduit est un conduit de montée et le deuxième conduit est un conduit de descente.

11. Procédé pour réaliser une réaction à haute pression continue, dans lequel un fluide est introduit dans un réacteur à boucle interne (201) selon l'une quelconque des revendications précédentes, et un fluide ayant réagi est retiré via la sortie de fluide du réacteur à boucle (201).
